# EUROPÄISCHE PATENTSCHRIFT

(11) **EP 1 729 866 B1**
(45) Veröffentlichungstag und Bekanntmachung des Hinweises auf die Patenterteilung: **02.09.2015**
(21) Anmeldenummer: 04724260.7
(22) Anmeldetag: 30.03.2004
(51) Int. Cl.: B01D 15/08, G01N 30/60, G01N 30/14, B01D 29/23, B01D 29/27

(54) **FILTER MIT STÜTZKÄFIG**
FILTER WITH SUPPORT CAGE
FILTRE PRESENTANT UN ELEMENT DE RETENUE ET DE SUPPORT

(43) Veröffentlichungstag der Anmeldung: 13.12.2006
(73) Patentinhaber: Dr. Tittgen Biotechnologie, 32257 Bünde (DE)
(72) Erfinder: TITTGEN, Jochen, 32257 Bünde (DE)
(74) Vertreter: Weber, Birgit
(86) Internationale Anmeldenummer: PCT/EP2004/003366
(87) Internationale Veröffentlichungsnummer: WO 2005/105256

(56) Entgegenhaltungen:
- EP-A- 1 108 457
- WO-A-97/24169
- DE-A- 10 201 858
- US-A- 5 250 179
- US-A1- 2002 108 896

## Beschreibung

Die vorliegende Erfindung bezieht sich allgemein auf Chromatographie-Trennsäülen sowie Filter für derartige Chromatographie-Säulen. Derartige Geräte können bspw. zur Trennung von Nukleinsäuren verwendet werden.

Verfahren zur Trennung von Nukleinsäuren und Vorrichtungen mit gattungsgemässen Filtereinrichtungen zur Durchführung eines solchen Verfahrens sind beispielsweise aus der DE 102 01 858 A1 bekannt. Genauer gesagt ist aus diesem Dokument eine Trennvorrichtung bekannt, die im wesentlichen eine Kunststoffsäule aufweist, in der Chromatographie-Material sowie ein stromaufwärts des Chromatographie-Materials vorgesehenes Filtermaterial angeordnet sind. Das Filtermaterial bildet dabei ohne Vorsehen von Kunststoffbestandteilen durch entsprechendes Falten von Papiermaterial einen im wesentlichen zylindrischen Körper, der in die Kunststoffsäule einsetzbar und nach Gebrauch wieder herausnehmbar ist. Der gefaltete Papierzylinder ist dabei nicht formstabil, vielmehr füllt er mehr oder weniger den Innenraum der Trennsäule.

Es ist nunmehr Aufgabe der vorliegenden Erfindung, diese bekannte gattungsgemäße Trennvorrichtung dahingehend zu verbessern, dass auch bei einer geringeren, nicht formstabilen Menge an verwendetem (Papier)- Filtermaterial eine ordnungsgemässe Positionierung des Filtermaterials gewährleistet wird.

Genauer gesagt wird die Aufgabe durch die Merkmale der unabhängigen Ansprüche gelöst, wobei die abhängigen Ansprüche die Erfindung in besonders vorteilhafter Weise weiterbilden.

Gemäss einem ersten Aspekt der vorliegenden Erfindung ist ein Filtereinsatz für eine Chromatographie-Säule vorgesehen, der aufweist:
- einen Stützkäfig, dessen Kontur einen einseitig offenen Zylinder definiert, und
- ein Filter, das an der Innenseite des Stützkäfiges anliegt und einen einseitig offenen Hohlraum definiert,
wobei der Stützkäfig an seinem offenen Ende einen im wesentlichen ringförmigen Kragen aufweist.

Der Stützkäfig kann vorzugsweise in dem an den Kragen angrenzenden Bereich einen muffenförmigen Abschnitt mit geschlossener Mantelfläche aufweisen, dessen Aussendurchmesser über die Mantelkontur des Stützkäfiges hinaussteht.

Der Stützkäfig kann aus einem Kunststoffmaterial gefertigt sein.

Die Mantelkontur des Stützkäfiges kann durch Längsstreben sowie wenigstens eine Ringstrebe gebildet sein.

Die Stirnseite des Stützkäfiges kann durch wenigstens eine Querstrebe definiert sein.

Das Filter ist fest mit der Innenseite des Stützkäfiges verbunden, insbesondere verklebt.

Das Filter ist aus einem Papiermaterial gefertigt, das einlagig die Innenkontur des Stützkäfigs auskleiden kann.

Gemäss einem weiteren Aspekt ist eine Chromatographie-Trennsäule vorgesehen, die ein an einem Ende offenes und den anderen Ende mit einem verjüngten Auslass versehenes spritzenförmiges Säulenelement aufweist, in das ein Filtereinsatz der o.g. Art eingesetzt ist.

Der Stützkäfig kann dabei derart bemessen sein, das er wenigstens teilweise mit seiner Mantelfläche innen an dem Säulenelement anliegt.

Wenigstens ein Teil der Mantelfläche, insbesondere der muffenförmige Abschnitt des Stützkäfiges kann reibschlüssig an der Innenwand des Säulenelements anliegen, während der übrige Teil der Mantelfläche von der Innenwand des Säulenelements beabstandet ist.

Der Kragen des Stützkäfiges kann auf dem offenen Ende des Säulenelements oder an einem dort vorgesehenen Flansch aufliegen, wobei die Länge des Filtereinsatzes derart bemessen ist, dass zwischen der geschlossenen Stirnseite des Stützkäfiges und dem Auslass des Säulenelements ein Freiraum gebildet ist.

In dem Freiraum kann Chromatographiematerial vorgesehen sein.

Der Stützkäfig kann im Bereich seines offenen Endes direkt oder indirekt mittels eines separaten oder mit dem Stützkäfig verbundenen Dichtelements gasdicht mit dem Säulenelement verbunden sein.

Gemäss einem noch weiteren Aspekt der vorliegenden Erfindung ist ein Chromatographie-Vorrichtung vorgesehen, die eine Trennsäule der o.g. Art sowie eine Vorrichtung aufweist, um den Auslass der Trennsäule mit Unterdruck zu beaufschlagen.

Schliesslich wird eine Chromatographie-Trennsäule vorgeschlagen, die aufweist:
- ein an einem Ende offenes und an dem anderen Ende mit einem verjüngten Auslass versehenes spritzenförmiges Säulenelement, und
- ein in das Säulenelement eingesetztes Filter, wobei das Filter flächig ausgestaltet ist und in sich einen einseitig in Richtung des offenen Endes des Säulenelementes offenen Hohlraum begrenzt.
Bei entsprechender Festigkeit des Filtermaterials kann also der Stützkäfig ggf. entfallen, wenn das Filtermaterial derart formstabil ist, dass es die Funktion des Stützkäfig in sich integriert. Das stulpenartig geformte Filter kann mit einem Kragen bspw. wie oben definiert aus einem Kunststoff randseitig verbunden (z.B. verschweißt oder verklebt) sein, der die Positionierung gegenüber der Säule gewährleistet.

Das Filter kann ggf. durch Teilelemente eines Käfigs, d.h. Versteifungsringe oder Streben noch besser in From gehalten werden. Der Käfig muss also nicht vollständig ausgebildet sein.

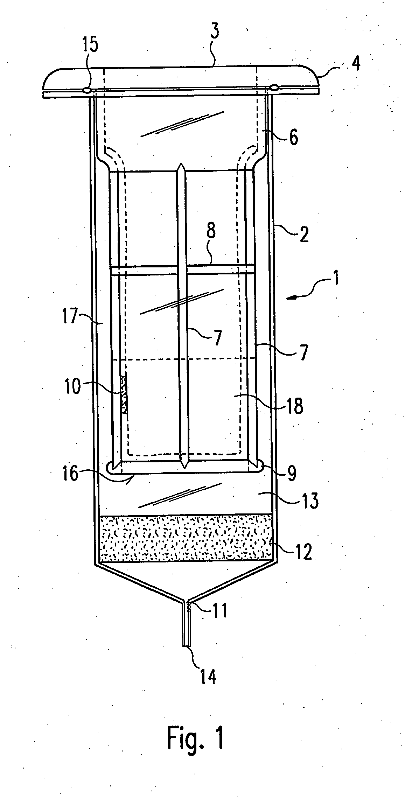

Weitere Merkmale, Vorteile und Eigenschaften sollen nunmehr Bezug nehmend auf die einzige Figur der beigefügten Zeichnung näher erläutert werden. Diese Figur zeigt eine schematische Ansicht einer erfindungsgemäßen Chromatographie-Trennsäule mit einem Filtereinsatz mit Stützkäfig.

Wie in der Figur ersichtlich, sind die Hauptbestandteile der erfindungsgemäßen Chromatographie-Säule 1 ein Filtereinsatz bestehend im wesentlichen aus einem Stützkäfig 3 und einem Filter 10, das Chromatographiematerial 12 sowie ein im wesentliches spritzenförmiges Säulenelement 2, in das der Filtereinsatz eingesetzt ist.

Die Gestaltung des Stützkäfigs 3, insbesondere die Abmessungen der Zwischenräume zwischen den Streben des Stützkäfigs, ist abhängig von der Festigkeit (Steifigkeit, Tragkraft etc.) des verwendeten Filtermaterials gewählt.

Wie bereits ausgeführt besteht der Filtereinsatz im wesentlichen aus einem Stützkäfig 3, der beispielsweise beispielsweise durch Spritzgießen aus einem Kunststoffmaterial gefertigt sein kann. In diesen Stützkäfig 3 ist der Filter 10 beispielsweise aus einem flächigen Material, wie bspw. einem einlagigen Papiermaterial eingefügt, derart, dass das Filter 10 die Stirnfläche 16 sowie die Mantelfläche des im wesentlichen zylinderförmigen Stützkäfigs 3 innen auskleidet. Das Filter 10 kann dabei an die Innenflächen der den Stützkäfig 3 bildenden Längsstreben 7 und Querrringe 8, 9 beispielsweise durch Verkleben fest verbunden sein. Somit wird gewährleistet, dass während des Filtriervorgangs die einlagige Papierfilterschicht stets korrekt in derjenigen Position gehalten wird, die durch die Form des im Vergleich zu dem Filtermaterial steifen Stützkäfigs 3 vorgegeben ist.

Selbstverständlich kann das Filtermaterial auch mehrlagig vorgesehen sein, wobei die mehreren Lagen miteinander verbunden sein können. Zumindest die äusserste Lage sollte mit dem Stützkäfig 3 verbunden sein,

Das flächige Filtermaterial wird durch den Stützkäfig in einer glatten, im wesentlichen faltenfreien Form gehalten, die in sich einen einseitig offenen Hohlraum begrenzt.

An den eigentlichen Käfigbereich 17, der durch die genannten Längsstreben 7 und Querstreben 8, 9 gebildet ist, schließt sich ein muffenförmiger Abschnitt 6 an, dessen Mantelfläche wie aus der Figur schematisch ersichtlich im Gegensatz zu der des eigentlichen Käfigbereichs 17 geschlossen ist. Darüber hinaus ist weist die Außenkontur des muffenförmigen Abschnitts 6 einen größeren Durchmesser als die des Käfigbereichs 17 auf.

An den muffenförmigen Abschnitt 6 grenzt sich wiederum ein Kragen 4 an.

Um sicherzustellen, dass das Filtermaterial 10 auch stirnseitig korrekt in Position gehalten ist, kann vorgesehen sein, dass neben der Längsstrebe 9 auch eine (in der Figur nicht dargestellte) Diagonalstrebe vorgesehen ist, auf der sich also das Filtermaterial stirnseitig abstützen kann.

Der genannte Filtereinsatz bestehend aus dem Stützkäfig 3 und dem Filter 10 kann in eine spritzenförmige Kunststoffsäule 2 von deren offenen Ende her eingesetzt werden. Im in der Figur dargestellten eingesetzten Zustand hängt der Filtereinsatz mit seinem Kragen 4 auf dem offenen Ende der Kunststoffsäule 2, wobei dieses Ende wie in der Figur dargestellt ebenfalls flanschartig (s. Bezugszeichen 5) erweitert sein kann.

Der Außendurchmesser des muffenförmigen Abschnitts 6 des Filtereinsatzes ist vorzugsweise derart ausgestaltet, dass der Filtereinsatz in diesem Bereich reibschlüssig an der Innenwand der Kunststoffsäule 2 anliegt. Weiterhin kann vorgesehen sein, dass im Bereich des muffenförmigen Abschnitts 6 und/oder des Kragens 4 der Filtereinsatz im wesentlichen luftdicht mit der Kunststoffsäule 2 abschießt. Dies kann ggf. durch separate (O-Ring 15) oder mit dem Filtereinsatz 3 integral ausgebildete Dichtelemente unterstützt werden.

Wie aus der Figur ersichtlich, berührt der Stützkäfig 3 die Kunststoffsäule 2 nur im Bereich des Kragens 4 sowie des erweiterten muffenförmigen Abschnitts 6. Der übrige Teil des Stützkäfigs 3, und insbesondere der eigentliche Käfigbereich 17 mit den Ringstreben 8, 9 und den Längsstreben 7 ist dagegen von der Innenwand der Kunststoffsäule 2 beabstandet.

Darüber hinaus kann die Längsdimensionierung des Stützkäfigs 3 derart bemessen sein, dass zwischen der Stirnseite 16 des Stützkäfigs 3 und dem Auslaß 11 der Chromatographie-Trennsäule ein Freiraum 13 gebildet ist, der wenigstens teilweise mit Chromatographie-Material 12 gefüllt sein kann. Dieses Chromatographie-Material 12 kann beispielsweise dazu geeignet sein, ein Nukleinsäuregemisch aufzutrennen. Dazu ist insbesondere Chromatographie-Material geeignet, das in den Dokumenten EP 744 025 B1 sowie EP 1 242 816 B1 beschrieben ist. Die Stirnseite 16 des Stützkäfigs 3 ist dabei ausreichend von dem Chromatographie-Material 12 beabstandet, wenn der Filtereinsatz vollständig in die Säule eingeschoben ist.

Insbesondere abhängig von der Art und der Dichte des verwendeten Chromatographie-Materials 12 kann es ausreichend sein, die in der Figur schematisch dargestellte Chromatographie-Trennsäule vertikal auszurichten und das zu behandelnde Material in den durch den Stützkäfig 3 und das Filter 10 gebildeten Hohlraum 18 einzugeben, so dass es allein durch Schwerkraftwirkung durch das Filtermaterial 10 und anschließend durch das Chromatographie-Material 12 hindurchtritt.

Ggf. kann es indessen auch notwendig sein, den Auslaßbereich 14 der Trennsäule 2 mit Vakuum zu beaufschlagen. Insbesondere in diesem Fall ist auf einen luftdichten Abschluß zwischen dem Filtereinsatz und der Innenwand der Trennsäule 2 im Bereich des muffenförmigen Abschnitts 6 und/oder des Kragens 4 des Stützkäfigs 3 zu achten.

Erfindungsgemäß wird also durch die sichere Positionierung des Filtermaterials 10 in dem Stützkäfig 3 sowie die durch entsprechende Ausgestaltung des Stützkäfigs 3 gewährleistete Positionierung von diesem in der Trennsäule 12 eine ordnungsgemäße Ausrichtung des Filters 10 während des Betriebs sichergestellt, obwohl das gewählte einlagige Filtermaterial selbst nicht formstabil ist. Die Formstabilität wird vielmehr durch den Stützkäfig 3 gewährleistet.

Beim Stand der Technik (DE 102 01 858 A1) ist das Papierfiltermaterial selbst nicht formstabil, vielmehr muß eine korrekte Positionierung durch vollständiges Ausfüllen des Innenraums der Trennsäule für eine Vorgabe der Positionierung des Filters gesorgt werden. Dadurch, dass die Form des Filters indessen bei der vorliegenden Erfindung nicht durch das Filtermaterial und/oder die Trennsäule 2, sondern durch entsprechende Wahl der Form des Stützkäfigs 3 vorgegeben ist, eröffnen sich vielfältige Designmöglichkeiten auch bezüglich komplexeren Filterformen.

Schliesslich wird eine Chromatographie-Trennsäule vorgeschlagen, die aufweist:
- ein an einem Ende offenes und an dem anderen Ende mit einem verjüngten Auslass versehenes spritzenförmiges Säulenelement, und
- ein in das Säulenelement eingesetztes Filter, wobei das Filter flächig ausgestaltet ist und in sich einen einseitig in Richtung des offenen Endes des Säulenelementes offenen Hohlraum begrenzt.
Bei entsprechender Festigkeit des Filtermaterials kann also der Stützkäfig ggf. entfallen, wenn das Filtermaterial derart formstabil ist, dass es die Funktion des Stützkäfig in sich integriert. Das stulpenartig geformte Filter kann mit einem Kragen bspw. wie oben definiert aus einem Kunststoff randseitig verbunden (z.B. verschweißt oder verklebt) sein, der die Positionierung gegenüber der Säule gewährleistet. Das Filter kann ggf. durch Teilelemente eines Käfigs, d.h. Versteifüngsringe oder Streben noch besser in From gehalten werden. Der Käfig muss also nicht vollständig ausgebildet sein.

## Patentansprüche

1. Filtereinsatz für eine Chromatographie-Säule (1) aufweisend
- einen Stützkäfig (3), dessen Kontur einen einseitig offenen Zylinder definiert, und
- ein Filter (10), das an der Innenseite des Stützkäfigs (3) anliegt und einen einseitig offenen Hohlraum definiert
wobei der Stützkäfig (3) an seinem offenen Ende einen im Wesentlichen ringförmigen Kragen (4) aufweist,
**dadurch gekennzeichnet,**
**dass** das Filter (10) aus einem Papiermaterial gefertigt ist und fest mit der Innenseite des Stützkäfigs (3) verbunden ist und die Stirnfläche (16) sowie die Mantelfläche des im wesentlichen zylinderförmigen. Stützkäfigs (3) innen auskleidet.

2. Filtereinsatz nach Anspruch 1,
**dadurch gekennzeichnet,**
**dass** der Stützkäfig (3) vorzugsweise in dem an den Kragen (4) angrenzenden Bereich einen muffenförmigen Abschnitt (6) mit geschlossener Mantelfläche aufweist, dessen AuBendurchmesser über die Mantelkontur des Stützkäfigs (3) hinaussteht.

3. Filtereinsatz nach einem der vorhergehenden Ansprüche,
**dadurch gekennzeichnet,**
**dass** der Stützkäfig (3)aus einem Kunststoffmaterial gefertigt ist.

4. Filtereinsatz nach einem der vorhergehenden Ansprüche,
**dadurch gekennzeichnet,**
**dass** die Mantelkontur des Stützkäfigs durch Langsstreben (7) sowie wenigstens eine Ringstrebe (8) gebildet ist.

5. Filtereinsatz nach einem der vorhergehenden Ansprüche,
**dadurch gekennzeichnet,**
**dass** die Stirnkanten des Stützkäfigs (3) durch wenigstens eine Querstrebe (9) definiert ist.

6. Filtereinsatz nach nach einem der vorhergehenden Ansprüche,
**dadurch gekennzeichnet,**
**dass** das Papiermaterial einlagig die Innenkontur des Stützkäfigs (3) auskleidet.

7. Chromatographie-Trennsäule,
**dadurch gekennzeichnet,**
**dass** sie ein an einem Ende offenes und an dem anderen Ende mit einem verjüngten Auslass (11) versehenes spritzenförmiges Säulenelement (2) aufweist, in das ein Filtereinsatz (3, 10) nach einem der vorhergehenden Ansprüche eingesetzt ist.

8. Chromatographie-Trennsäule nach Anspruch 7,
**dadurch gekennzeichnet,**
**dass** der Stützkäfig (3) derart bemessen ist, das er wenigstens teilweise mit seiner Mantelfläche innen an dem Säülenelement (2) anliegt.

9. Chromatographie-Trennsäule nach Anspruch 8,
**dadurch gekennzeichnet,**
**dass** wenigstens ein Teil der Mantelfläche, insbesondere der muffenformige Abschnitt (6), des Stützkäfigs (3) reibschlüssig an der Innenwand des Säulenelements (2) anliegt, während der übrige Teil der Mantelfläche von der Innenwand des Säulenelements (2) beabstandet ist.

10. Chromatographie-Trennsäulenach einem der Ansprüche 7 bis 9,
**dadurch gekennzeichnet,**
**dass** der Kragen (4) des Stützkäfigs (3) auf dem offenen Ende (5) des Säulenelements (2) aufliegt, wobei die Länge des Filtereinsatzes derart bemessen ist, dass zwischen der geschlossenen Stirnseite des Stützkäfigs (3) und dem Auslass des Säulenelements (2) ein Freiraum (13) gebildet ist.

11. Chromatographie-Trennsäule nach Anspruch 10,
**dadurch gekennzeichnet,**
**dass** in dem Freiraum (13) Chromatographiematerial (12) vorgesehen ist.

12. Chromatographie-Trennsäule nach einem der Ansprüche 7 bis 11,
**dadurch gekennzeichnet,**
**dass** der Stützkäfig (3) im Bereich seines offenen Endes direkt oder indirekt mittels eines separaten oder mit dem Stützkäfig (3) verbundenen Dichtelements (15) luftdicht mit dem Säulenelement (2) verbunden ist.

13. Chromatographie-Trennvorrichtung,
**dadurch gekennzeichnet,**
**dass** sie eine Trennsäule (2) nach einem der Ansprüche 7 bis 12 sowie eine Vorrichtung aufweist, um den Auslass (11) der Trennsäule mit Unterdruck (14) zu beaufschlagen.

## Claims

1. Filter insert for a chromatographic column (1), comprising
- a support cage (3) whose contour defines a cylinder that is open at one end, and
- a filter (10) which lies against the inner side of the support cage (3) and defines a cavity that is open on one side,
wherein the support cage (3) has an essentially ring-shaped collar (4) at its open end, **characterized in that**
the filter (10) is made of a paper material and is fixedly connected to the inner side of the support cage (3), and lines the interior of the end face (16) and of the lateral face of the essentially cylindrical support cage (3).

2. Filter insert according to Claim 1,
**characterized in that**
in the area adjoining the collar (4), the support cage (3) preferably has a socket-shaped section (6) with a closed lateral face, the outside diameter of the socket-shaped section protruding beyond the shell contour of the support cage (3).

3. Filter insert according to one of the preceding claims, **characterized in that** the support cage (3) is made of a plastic material.

4. Filter insert according to one of the preceding claims,
**characterized in that**
the shell contour of the support cage is formed by longitudinal braces (7) and at least one annular brace (8).

5. Filter insert according to one of the preceding claims, **characterized in that** the end face of the support cage (3) is defined by at least one transverse brace (9).

6. Filter insert according to one of the preceding claims, **characterized in that** the paper material lines the inner contour of the support cage (3) in a single ply.

7. Chromatographic separation column,
**characterized in that**
it has a syringe-shaped column element (2) which is open at one end and which is provided with a tapered outlet (11) at the other end, into which column element a filter insert (3, 10) according to one of the preceding claims is inserted.

8. Chromatographic separation column according to Claim 7,
**characterized in that**
the support cage (3) is dimensioned in such a way that it lies, at least partially, with its lateral face against the inside of the column element (2).

9. Chromatographic separation column according to Claim 8,
**characterized in that**
at least a portion of the lateral face, in particular the socket-shaped section (6), of the support cage (3) lies against the inner wall of the column element (2) with a frictional fit, while the remaining portion of the lateral face is situated at a distance from the inner wall of the column element (2).

10. Chromatographic separation column according to one of Claims 7 to 9,
**characterized in that**
the collar (4) of the support cage (3) rests on the open end (5) of the column element (2), the length of the filter insert being dimensioned in such a way that a clearance (13) is formed between the closed end-face side of the support cage (3) and the outlet of the column element (2).

11. Chromatographic separation column according to Claim 10,
**characterized in that**
chromatographic material (12) is provided in the clearance (13).

12. Chromatographic separation column according to one of Claims 7 to 11,
**characterized in that**
in the area of its open end, the support cage (3) is directly or indirectly connected in an air-tight manner to the column element (2) by means of a sealing element (15) which is separate or connected to the support cage (3).

13. Chromatographic separation device,
**characterized in that**
it has a separation column (2) according to one of Claims 7 to 12, as well as a device for acting on the outlet (11) of the separation column with negative pressure (14).

## Revendications

1. Insert de filtration destiné à une colonne de chromatographie (1) comprenant
- une cage de support (3) dont le contour définit un cylindre ouvert d'un côté, et
- un filtre (10) qui repose sur le côté intérieur de la cage de support (3) et qui définit une cavité ouverte d'un côté,
la cage de support (3) comportant à son extrémité ouverte un rebord sensiblement annulaire (4),
**caractérisé en ce que** le filtre (10) est réalisé en papier et est relié solidairement au côté intérieur de la cage de support (3) et la face frontale (16) ainsi que la surface d'enveloppe de la cage de support sensiblement cylindrique (3) garnissent l'intérieur.

2. Insert de filtration selon la revendication 1, **caractérisé en ce que** la cage de support (3) est de préférence comporte, dans la région adjacente au rebord (4), une partie (6) en forme de manchon qui possède une surface d'enveloppe fermée et dont le diamètre extérieur s'étend au-delà du contour d'enveloppe de la cage de support (3).

3. Insert de filtration selon l'une des revendications précédentes, **caractérisé en ce que** la cage de support (3) est réalisée en matière plastique.

4. Insert de filtration selon l'une des revendications précédentes, **caractérisé en ce que** le contour d'enveloppe de la cage de support est formé par de longs montants (7) et par au moins un montant annulaire (8).

5. Insert de filtration selon l'une des revendications précédentes, caractérisé en que les bords avant de la cage de support (3) sont définis par au moins un montant transversal (9).

6. Insert de filtration selon l'une des revendications précédentes, **caractérisé en ce que** le papier recouvre le contour intérieur de la cage de support (3) en une seule couche.

7. Colonne de séparation chromatographique, **caractérisée en ce qu'**elle comporte un élément de colonne (2) en forme de seringue qui est ouvert à une extrémité, qui est pourvu à l'autre extrémité d'un orifice de sortie conique (11) et dans lequel est inséré dans un insert de filtration (3, 10) selon l'une des revendications précédentes.

8. Colonne de séparation chromatographique selon la revendication 7, **caractérisée en ce que** la cage de support (3) est dimensionnée de telle sorte qu'elle porte au moins partiellement par sa surface d'enveloppe à l'intérieur sur l'élément de colonne (2).

9. Colonne de séparation chromatographique selon la revendication 8, caractérisé qu'au moins une partie de la surface d'enveloppe, en particulier la partie (6) en forme de manchon de la cage de support (3), porte par friction sur la paroi intérieure de l'élément de colonne (2), tandis que la partie restante de la surface d'enveloppe est espacé de la paroi intérieure de l'élément de colonne (2).

10. Colonne de séparation chromatographique selon l'une des revendications 7 à 9, **caractérisée en ce que** le rebord (4) de la cage de support (3) repose sur l'extrémité ouverte (5) de l'élément de colonne (2), la longueur de l'insert de filtration étant dimensionnée de telle sorte qu'un espace libre (13) est formé entre le côté frontal fermé de la cage de support (3) et la sortie de l'élément de colonne (2).

11. Colonne de séparation chromatographique selon la revendication 10, **caractérisée en ce qu'**un matériau chromatographique (12) est placé dans l'espace libre (13).

12. Colonne de séparation chromatographique selon l'une des revendications 7 à 11, **caractérisée en ce que** la cage de support (3) est reliée, au niveau de son extrémité ouverte, de façon à l'air à l'élément de colonne (2) directement ou indirectement au moyen d'un élément d'étanchéité (15) séparé ou relié à la cage de support (3).

13. Dispositif de séparation chromatographique, **caractérisé en ce qu'**il comprend une colonne de séparation (2) selon l'une des revendications 7 à 12, ainsi qu'un dispositif pour mettre la sortie (11) de la colonne de séparation à une pression négative (14).
